# EUROPÄISCHE PATENTSCHRIFT

(11) **EP 3 558 547 B1**
(45) Veröffentlichungstag und Bekanntmachung des Hinweises auf die Patenterteilung: **30.03.2022**
(21) Anmeldenummer: 17825534.5
(22) Anmeldetag: 21.12.2017
(51) Int. Cl.: A47J 42/02, A47J 42/38, B65H 35/00, B05B 12/24

(54) **KLEBEBANDABROLLER MIT UMLENKEINRICHTUNG**
ADHESIVE TAPE DISPENSER HAVING A DEFLECTING DEVICE
DÉVIDOIR DE RUBAN ADHÉSIF COMPRENANT UN SYSTÈME DE RENVOI

(30) Priorität: 22.12.2016 DE 102016226058
(43) Veröffentlichungstag der Anmeldung: 30.10.2019
(73) Patentinhaber: TESA SE, 22848 Norderstedt (DE)
(72) Erfinder: GERDSMANN, Thomas, 22529 Hamburg (DE); HIMMELSBACH, Peter, 21614 Buxtehude (DE); ZIBULL, Michael, 25436 Uetersen (DE)
(74) Vertreter: tesa SE
(86) Internationale Anmeldenummer: PCT/EP2017/084247
(87) Internationale Veröffentlichungsnummer: WO 2018/115371

(56) Entgegenhaltungen:
- WO-A1-80/02391
- JP-A- H09 183 556
- US-A- 3 743 150
- US-A- 4 067 510
- US-A1- 2016 023 861

## Beschreibung

Die Erfindung betrifft einen Klebebandabroller sowie ein Verfahren zum Aufkleben eines Klebebandes auf eine Bauteiloberfläche.

Klebebandabroller sind im Stand der Technik grundsätzlich natürlich bekannt.

Aus der DE 20 2007 011 400 U1 ist ein Klebebandhandabroller in kompakter Bauart bekannt. Der dort offenbarte Klebebandhandabroller weist ein klappbares Gehäuse mit zwei im zusammengeklappten Zustand eine Klebebandrolle bevorratende Gehäusehalbschalen auf. Eine Achse zum Aufstecken der Klebebandrolle wird durch zwei ineinander steckbare Achsstützen ausgebildet, die innenseitig an jeweils einer der beiden Gehäusehalbschalen angeordnet sind. Problematisch an dem Klebebandhandabroller ist, dass ein geführtes Aufkleben eines Maskierungsbandes entlang einer Kante in einem bestimmten Abstand nur schwer möglich ist.

In der DE 10 2005 034 007 A1 ist ein Handgerät zum Abrollen eines Klebebandes offenbart. Das Klebeband besteht aus einem einseitig mit einer klebenden Schicht ausgerüsteten Träger, dessen Klebmasse durch einen Trennmaterialstreifen abgedeckt ist. Der Klebebandhandabroller gestattet es, den Trennmaterialstreifen während des Auftragsvorgangs automatisch von der klebenden Schicht des Trägers zu lösen. Auch an diesem Klebebandhandabroller ist nachteilig, dass zum einen ein geführtes Auftragen des Klebebandes entlang einer Kante nur schwer möglich ist und zum anderen ein in Auftragsrichtung gerichteter Griff den Auftrag in Auftragsrichtung behindert.

Aus der DE 20 2012 004 079 U1 ist ein Klebebandhandabroller zum Aufbringen eines Klebeband in einer Auftragsrichtung auf eine verunreinigte Oberfläche bekannt. Dabei ist in Auftragsrichtung vor einer Andrückwalze eine Reinigungseinrichtung für Oberflächenreinigungen vorgesehen.

Auch dieser Klebebandhandabroller ist nicht geeignet, Klebebänder geführt bis an Ränder von Bauteiloberflächen aufzubringen, da deren Auftrag durch die Klebebandrolle behindert wird.

Aus der WO8002391A1 ist ein Stand-Abroller bekannt, mit dem ein "masking tape" abgerollt und während des Abrollens geknickt werden kann. Der Abroller knickt ein spezielles "masking tape" an der Kante zwischen einem klebenden und einem nicht-klebende Teil des Klebebandes durch eine speziell geformte Walze. Mittels einer der Schneidvorrichtung wird das Klebeband abgeschnitten und anschließend auf eine zu lackierende Oberfläche eines Bauteils aufgetragen.

Die US 3 743 150 A beschreibt einen stationären Spender für Abdeckband und wird an einem Gegenstand, Z. B. eine Tischplatte, mittels Klemmen fixiert. Der Spender weist eine besonders geformte Klinge auf, mit der keilförmige Schnittkanten erzeugt werden können.

Aus der US 2016/023861 A1 ist eine stationäre Vorrichtung zum Bekleben eines Wafers mit einem Maskier-Klebebandes bekannt. Die stationäre Vorrichtung führt das Maskier-Klebeband mittels einer Positionierrolle und einer Seitenrolle bzw. mit einem Haltekopf tangential an die Kante eines Wafers heran.

Die US 4 067 510 A beschreibt einen handgeführten Abroller für ein Maskier-Klebeband zum Abkleben von Teppichen die vor Fußleisten angebracht sind.

Es ist in einem ersten Aspekt Aufgabe der vorliegenden Erfindung, einen Klebebandabroller zur Verfügung zu stellen, der die oben genannten Nachteile vermeidet.

Es ist in einem zweiten Aspekt Aufgabe der vorliegenden Erfindung, ein Verfahren zum Aufkleben eines Klebebandes zur Verfügung zu stellen, das die oben genannten Nachteile vermeidet.

Hinsichtlich der Vorrichtung wird die Aufgabe durch einen eingangs genannten Klebebandabroller mit den Merkmalen des Anspruchs 1 erfüllt.

Bei dem erfindungsgemäßen Klebebandabroller handelt es sich um einen vorzugsweise handgeführten Klebebandabroller mit einer Aufnahme für eine Klebebandrolle und einem Führungssystem für ein von der Klebebandrolle abgezogenes Klebeband und einer in Abziehrichtung am Ende des Führungssystems angeordneten Umlenkkante für das abgezogene Klebeband, die das abgezogene Klebeband aus einer Abziehrichtung umlenkt und die eine Umlenkachse aufweist, die eine in Abziehrichtung weisende, vorzugsweise parallel zur Abziehrichtung ausgerichtete Komponente aufweist. Eine Aufkleberichtung des Klebebandes nach der Umlenkkante ist erfindungsgemäß quer zur Abziehrichtung angeordnet.

Die Umlenkachse weist eine Achsenkomponente senkrecht zur Abziehrichtung und parallel zur Klebebandebene auf. Die Achsenkomponente entspricht der herkömmlichen Anordnung der Drehachsen von Rollen und der herkömmlicher Umlenkkanten. Das Klebeband wird dadurch quasi nach oben und unten umgelenkt. Die erfindungsgemäße Umlenkachse weist eine Achsenkomponente auf, die parallel zur Abziehrichtung angeordnet ist. Durch Vektoraddition der beiden Achsenkomponenten entsteht die Umlenkachse. Sie ist quer zur Abziehrichtung angeordnet, d. h. in einem Winkel, der nicht dem rechten Winkel entspricht.

Unter der Abziehrichtung wird hier die Richtung des von der Klebebandrolle abgezogenen Klebebandes unmittelbar vor der Umlenkkante verstanden. Die Umlenkkante ist eine dreidimensional geformte Kante, die aber eine eindimensionale Umlenkachse aufweist. Die Umlenkachse ist eine fiktive Linie, vorzugsweise innerhalb der Umlenkkante, die sich entlang der Längsausdehnung der Umlenkkante erstreckt und um die herum das Klebeband umgelenkt wird. Die Umlenkachse weist vorzugsweise einen in Längsrichtung der Umlenkkante gleichbleibenden Abstand zur Auflagefläche des Klebbandes auf der Umlenkkante auf.

Das abgezogene Klebeband wird aus der Abziehrichtung in einer Ebene der Klebebandrolle in eine Aufkleberichtung quer zur Ebene der Klebebandrolle umgelenkt. Unter der Ebene der Klebebandrolle wird dabei eine Ebene verstanden, die sich entlang der Hauptausdehnungsrichtungen der Klebebandrolle erstreckt. In dieser Ebene ist die Klebebandrolle im Wesentlichen vorzugsweise exakt kreisförmig ausgeformt.

Der erfindungsgemäße Klebebandabroller macht von der Idee Gebrauch, die übliche Geometrie des Führungssystems für das abgezogene Klebeband dahingehend zu verändern bzw. weiterzuentwickeln, dass die Ebene der Klebebandrolle und die Aufkleberichtung des Klebebandes nicht mehr parallel zueinander angeordnet sind, sondern quer zueinander. Dadurch ergeben sich bei bestimmten Anwendungen des Klebebandabrollers Vorteile, weil die Klebebandrolle mit ihrem teilweise nicht geringen Durchmesser von mehreren Zentimetern, möglicherweise auch über 10 cm, nicht mehr in der Aufkleberichtung des aufgeklebten Klebebandes angeordnet ist und dabei die Bewegung in Aufkleberichtung durch die Klebebandrolle behindert werden könnte, beispielsweise wenn eine zu beklebende Bauteiloberfläche in Aufkleberichtung am Ende durch eine senkrecht zur Bauteiloberfläche abgehende Wand begrenzt wird und die Klebebandrolle beim Aufkleben des Klebebandes gegen diese Wand stoßen würde. Durch die Anordnung der Klebebandrolle quer zur Auftragsrichtung des Klebebandes ist es möglich, den Klebebandabroller dichter an die begrenzende Wand heranzuführen.

Der Begriff quer ist hier grundsätzlich weit auszulegen, d. h., dass das Klebeband zunächst von der Klebebandrolle in einer Abziehrichtung abgezogen wird, die vorzugsweise exakt in der Ebene der Klebebandrolle und vorzugsweise parallel zur Ebene der Klebebandrolle liegt, während das abgezogene Klebeband nach Durchlaufen des Führungssystems und der Umlenkeinrichtung seine Richtung dahingehend ändert, dass eine Aufkleberichtung, d. h. die Längsrichtung des aufgeklebten Klebebandes quer zur Ebene der Klebebandrolle in einem Winkel zwischen 1° und 179° oder 181° bis 359° angeordnet ist.

Günstigerweise wird das Klebeband in der Umlenkeinrichtung um eine Umlenkkante gelenkt, und die Umlenkkante umfasst eine Umlenkachse in einem Winkel zwischen 90,5° und 179,5° oder 180,5° und 269,5° zur Ebene der Klebebandrolle und/oder zum Ende der Abziehrichtung des Klebebandes.

Besonders bevorzugt beträgt der Winkel der Umlenkkante zur Ebene der Klebebandrolle 135° bzw. 225° oder ± 20°, besonders bevorzugt ± 10°, wobei auch hier jede Gradzahl zwischen 115° und 155° bzw. zwischen 205° und 255° bevorzugt verwendet werden kann. In der günstigsten Ausführungsform ist die Umlenkkante in einem Winkel von 135° oder 225° angeordnet und das Klebeband dadurch um 90° nach links bzw. rechts umgelenkt.

In der Erfindung ist neben der Umlenkeinrichtung eine Anlage vorgesehen, die während des Aufklebens des Klebebandes auf eine Bauteiloberfläche einen gleichbleibenden Abstand zwischen einem Bauteilrand und einem aufgeklebten Klebestreifen vorgibt. Die Anlage hat die Funktion einer Führung des Klebebandabrollers entlang des Bauteilrandes.

Günstigerweise weist die Anlage eine ebene Anlagefläche auf, vorzugsweise ist sie als ebene Anlagefläche ausgebildet, die gegen den Bauteilrand drückbar ist, und der Klebebandabroller wird unter ständigem Kontakt der Auflagefläche an den Bauteilrand entlang der Bauteiloberfläche gezogen. Die Umlenkkante ist dabei schräg zur Anlagefläche angeordnet, vorzugsweise ist die Anlagefläche parallel zur Auftragsrichtung ausgerichtet.

Bevorzugt ist die Anlagefläche der Geometrie des Bauteils angepasst, um eine formschlüssige Führung des Klebebandabrollers zu ermöglichen.

In einer günstigen Weiterbildung der Erfindung ist die Umlenkeinrichtung einstückig ausgebildet, und an einer dem Bauteil zugewandten Seite ist die Anlagefläche vorgesehen, und benutzerseitig der Anlagefläche ist ein zum Bauteil abstehender Streifen vorgesehen, dessen eine Längsseite abgeschrägt ist und die Umlenkkante ausbildet. Die Umlenkeinrichtung ist dabei vorzugsweise als Umlenkblock ausgebildet, in den integral die Anlage eingeformt ist; durch das Einformen der Anlagefläche bildet sich der vom Umlenkblock abstehende Streifen aus. Die Anlagefläche und die Bauteilseite des schmalen Streifens können einer besonderen Kontur eines zu beklebenden Spaltes o. Ä. angepasst sein.

In der Anwendung steht der Streifen zum Bauteil, das mit dem Klebeband beklebt werden soll, hin ab. Der zum Bauteil hin abstehende Streifen ist an einer freien Ecke abgeschrägt, und diese Abschrägung kann die Umlenkkante ausbilden. Die integrale Ausbildung von Anlagefläche und Umlenkkante ist besonders kostengünstig herstellbar und wartungsfrei. Die Umlenkkante weist günstigerweise eine Fase auf, um einen gezielten Klebebandauftrag zu ermöglichen.

Vorzugsweise ist auf der dem Benutzer abgewandten Seite des abstehenden Streifens ein Anpressmittel für das aufgeklebte Klebeband vorgesehen. Bei dem Anpressmittel kann es sich um einen Filzstreifen handeln.

Besonders bevorzugt weist das Führungssystem eine Mehrzahl von Umlenkrollen und Führungsrollen auf, besonders bevorzugt weist die Umlenkeinrichtung wenigstens zwei Rollen mit seitlich radial verlängerten Wangen auf sowie wenigstens zwei gerade Rollen. Erstere sind im Querschnitt im Wesentlichen H-förmig; die H-förmigen Rollen und die geraden Rollen wechseln sich in Abziehrichtung günstigerweise ab.

Daneben sind Ausführungsformen möglich, die auch nur eine Umlenkrolle aufweisen.

Da das Klebeband eine Klebeseite und eine Trägerseite aufweist und die Trägerseite nicht haftklebrig ist und die Klebeseite haftklebrig ist, wird das abgezogene Klebeband über die Rollen des Führungssystems geführt, und dabei rollt das abgezogene Klebeband über einige Rollen mit seiner nicht haftklebrigen Trägerseite und über andere Rollen mit seiner haftklebrigen Klebeseite ab.

Vorzugsweise sind die Rollen, die mit der haftklebrigen Klebeseite in Verbindung stehen, Kunststoffrollen oder weisen zumindest eine Kunststoffummantelung auf, die den Kontakt mit der haftklebrigen Schicht ausbildet, während die Rollen, die mit der Trägerseite des Klebebandes in Verbindung stehen, Metallrollen, vorzugsweise Stahlrollen sein können. Vorzugsweise ist zumindest die Ummantelung mit Metall beschichtet.

Vorzugsweise gehen von der Umlenkeinrichtung, günstigerweise vom Umlenkblock, zwei Griffe ab, die in Aufkleberichtung des Klebebandes ausgerichtet sind und mit jeweils einer Benutzerhand gegriffen werden können. Die Griffe können klappbar ausgebildet sein.

Es ist aber auch denkbar, einen benutzerseitig des Umlenkblocks angeordneten Bügelgriff vorzusehen.

In einem zweiten Aspekt wird die Aufgabe durch ein Verfahren mit den Merkmalen des Anspruchs 12 gelöst.

Das Verfahren eignet sich insbesondere zur Durchführung mit einem oder mehreren der oben genannten Klebebandabroller.

Erfindungsgemäß wird das Klebeband von einer Klebebandrolle abgezogen und durch ein Führungssystem geführt, und das abgezogene Klebeband wird mittels einer Umlenkeinrichtung aus einer Abziehrichtung in einer Ebene der Klebebandrolle in eine Aufkleberichtung quer zur Ebene der Klebebandrolle umgelenkt und das umgelenkte Klebeband auf die Bauteiloberfläche aufgeklebt. Das Klebeband wird mit seiner haftklebrigen Seite auf die Bauteiloberfläche aufgeklebt. Durch das Umlenken des Klebebandes nach dem Abziehen von der Klebebandrolle fallen die Abziehrichtung und die Aufkleberichtung nicht mehr zusammen, sondern sind quer zueinander angeordnet.

Der Klebebandabroller wird dazu günstigerweise an dem Griff oder den Griffen mit den beiden Händen des Benutzers gehalten und von links nach rechts oder von rechts nach links quer vor dem Benutzer mit der Hand geführt, während die Klebebandrolle in Längsrichtung mit der Ebene senkrecht zum Benutzer angeordnet ist und sich dabei abrollt. Durch die Anordnung der Klebebandrolle senkrecht oder zumindest quer zur Aufkleberichtung kann der Klebebandabroller enger an eine in Aufkleberichtung angeordnete, seitlich begrenzende Wand der Bauteiloberfläche herangeführt werden.

Vorzugsweise wird der Klebebandabroller mittels einer am Klebebandabroller angeordneten Anlage in einem gleichbleibenden Abstand zum Bauteilrand geführt. Die Anlage wird günstigerweise als Anlagefläche ausgebildet, die beispielsweise in einer Aussparung in den Umlenkblock eingelassen sein kann, so dass der Klebebandabroller mit seiner Anlagefläche an den Rand des Bauteils angedrückt wird und dann entlang einer Kante unter ständigem Kontakt der Auflagefläche mit dem Rand des Bauteils am Bauteil entlanggezogen wird und dabei kontinuierlich Klebeband in einem gleichbleibenden Abstand zur Kante der Bauteiloberfläche auf die Bauteiloberfläche aufgeklebt wird.

Vorzugsweise wird Klebeband in einem der oben genannten Winkel, günstigerweise in einem Winkel von 1° bis 179° oder 181° bis 359° umgelenkt, vorzugsweise in einem Winkel von 90° bzw. 270° ±20°, besonders bevorzugt ±10° umgelenkt.

Zusätzlich wird dabei eine Klebseite des Klebebandes von einer dem Benutzer zugewandten Seite des abgezogenen Klebebandes in eine dem Benutzer abgewandte Seite des aufgeklebten Klebebandes umgelenkt, d. h., es wird nicht nur die Abziehrichtung des Klebebandes geändert, sondern auch die Orientierung des Klebebandes, indem eine dem Benutzer zugewandte Seite des Klebebandes nach der Umlenkeinrichtung dem Benutzer abgewandt angeordnet ist. Bei dieser Seite handelt es sich daher vorzugsweise um die haftklebrige Klebeseite des Klebebandes.

Die Erfindung wird anhand eines Ausführungsbeispiels in zehn Figuren beschrieben, dabei zeigen:
- Fig. 1: eine erste perspektivische Ansicht eines Ausschnittes eines erfindungsgemäßen Klebebandabrollers mit Klebeband,
- Fig. 2: eine zweite perspektivische Ansicht des erfindungsgemäßen Klebebandabrollers mit umgelenktem Klebeband,
- Fig. 3: den Klebebandabroller der Fig. 1 und 2 in einer Seitenansicht beim Aufkleben eines Klebebandes,
- Fig. 4: eine vergrößerte Ansicht aus einer weiteren Perspektive der Fig. 3,
- Fig. 5: einen gespiegelten Klebebandabroller in einer Seitenansicht,
- Fig. 6: eine Umlenkkante des gespiegelten Klebebandabrollers in Fig. 5,
- Fig. 7: den Klebebandabroller in einer Frontansicht mit zwei Griffen,
- Fig. 8: den Klebebandabroller in Fig. 7 in einer Draufsicht mit zwei Griffen,
- Fig. 9: den Klebebandabroller mit nur einem Griff,
- Fig.10: den Klebebandabroller mit nur einem anderen Griff.

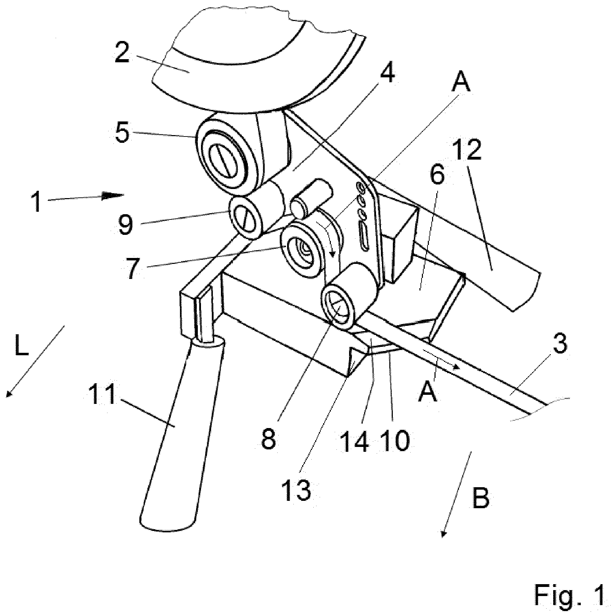

Ein in Fig. 1 schematisch dargestellter Klebebandabroller 1 zeigt einen Ausschnitt einer Klebebandrolle 2, auf der ein Klebeband 3 aufgewickelt ist. Das Klebeband 3 weist eine Trägerschicht und eine Klebeschicht auf. Die Trägerschicht und die Klebeschicht bilden jeweils eine Außenseite des Klebebandes 3. Die Klebeschicht ist in Fig. 1 radial innen auf die Trägerschicht des auf die Klebebandrolle 2 aufgewickelten Klebebandes 3 aufgebracht.

Die Klebebandrolle 2 weist eine (nicht dargestellte) mittig angeordnete Öffnung auf, die drehbar auf einem (nicht dargestellten) Zapfen des Klebebandabrollers 1 gelagert ist. Der Zapfen ist relativ beweglich zu einem Führungssystem angeordnet. Das Führungssystem weist in dieser Ausführungsform ein Blech 4 und eine vom Blech 4 abstehende und an ihm drehbar gelagerte erste Umlenkrolle 5 auf. Der Zapfen ist vorzugsweise mit einer Druckfeder in Richtung der ersten Umlenkrolle 5 vorgespannt, so dass das auf der Klebebandrolle 2 aufgewickelte Klebeband 3 unabhängig von der Anzahl der bereits abgewickelten Klebebandlagen mit geringer werdendem Radius ständig Kontakt mit der ersten Umlenkrolle 5 aufweist.

Das Klebeband 3 wird über das Führungssystem einer Umlenkkante 10 zugeführt. Das Führungssystem weist in der Ausführungsform gemäß Fig. 1 neben dem Blech 4 eine Mehrzahl von Führungs- und Umlenkrollen 7, 5, 8, 9 auf, deren Drehachsen parallel zueinander und alle von derselben Seite des Bleches 4 abstehen. Das Blech 4 ist auf einem Befestigungsblock 6 montiert, dessen eine Seite integral zur Umlenkkante 10 ausgeformt ist.

Gemäß einer Variante des Klebebandabrollers 1 ist die Umlenkkante 10 auf einem weiteren Applikationsblock vorgesehen, der nicht einstückig mit dem Befestigungsblock 6 ausgeführt ist. Beide Blöcke können mit Schrauben verbunden werden.

Der Vorteil an dieser Variante ist, dass nur der Applikationsblock mit der Umlenkkante 10 projektspezifisch angepasst werden kann. Abnutzungen an der Umlenkkante 10 führen zu gelegentlichem Tausch dieser.

In Fig. 1 sind drei Umlenkrollen 5, 8, 9 sowie eine Führungsrolle 7 vorgesehen. Die erste Umlenkrolle 5 ist mit ihrer Drehachse parallel zur Längsachse des Zapfens unmittelbar neben der Klebebandrolle 2 angeordnet, derart, dass die äußerste Klebebandlage unmittelbaren Kontakt mit der ersten Umlenkrolle 5 aufweist und das von der Klebebandrolle 2 abgezogene Klebeband 3 um etwa die Hälfte des Umfanges der ersten Umlenkrolle 5 herumgeführt ist. Insbesondere die erste Umlenkrolle 5 weist radial verlängerte Wangen auf, um ein Abrutschen des Klebebandes 3 seitlich von der ersten Umlenkrolle 5 zu verhindern.

In einer Abziehrichtung A ist der Klebebandrolle 2 gegenüberliegend neben der ersten Umlenkrolle 5 eine zweite Umlenkrolle 9 vorgesehen. Das Klebeband 3 wird während des Abziehens zwischen der ersten Umlenkrolle 5 und der zweiten Umlenkrolle 9 geführt und steht in Kontakt mit beiden Rollen. In Abziehrichtung A ist nach der zweiten Führungsrolle 9 eine Führungsrolle 7 vorgesehen. Bei der Führungsrolle 7 und der ersten Umlenkrolle 5 handelt es sich vorzugsweise um Metallrollen, vorzugsweise Stahlrollen, während die zweite Umlenkrolle 9 und die dritte Umlenkrolle 8 als Kunststoffrollen ausgebildet sind. Dabei beziehen sich die Materialangaben auf die Auflageflächen der Rollen, über die das Klebeband 3 läuft. Die Wahl unterschiedlicher Materialien trägt generell der Tatsache Rechnung, dass die Kunststoffrollen, also die zweite Umlenkrolle 9 und eine dritte Umlenkrolle 8 beim Abziehen mit der Klebeseite des Klebebandes 3 in Kontakt stehen, während die Metallrollen, also die erste Umlenkrolle 5 und die Führungsrolle 7, mit der nicht klebrigen Trägerschicht des Klebebandes 3 in Kontakt steht.

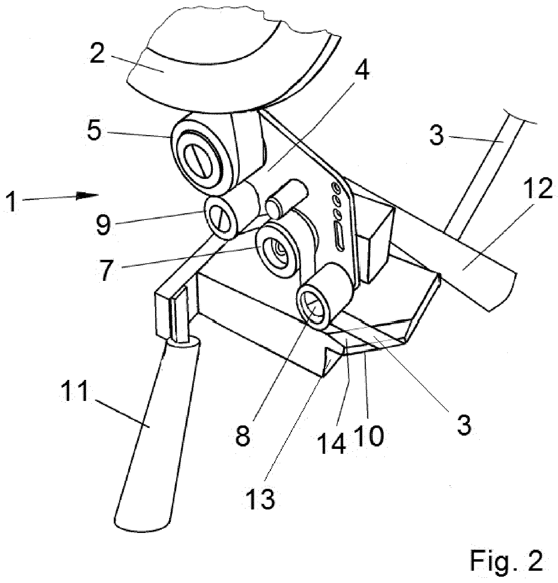

In Abziehrichtung A nach der Führungsrolle 7 ist die dritte Umlenkrolle 8 vorgesehen, die wiederum eine Kunststoffauflagefläche für die klebrige Seite des Klebebandes 3 aufweist. Die dritte Umlenkrolle 8 berührt vorzugsweise nicht die benutzerzugewandte Seite des Befestigungsblocks 6. Das Klebeband 3 wird zwischen der benutzerzugewandten Seite des Befestigungsblocks 6 und der dritten Umlenkrolle 8 unter Berührung beider zu einer Umlenkkante 10 geführt. Die Umlenkkante 10 ist in einem Winkel von 45° zur Abziehrichtung des Klebebandes 3 direkt nach der dritten Umlenkrolle 8 angeordnet. Die Umlenkkante 10 ist insbesondere auch in einem Winkel von 45° zur durch die Klebebandrolle 2 ausgebildeten Ebene angeordnet. Die Umlenkkante 10 ist so scharf ausgeformt, dass sie ein gezieltes Aufdrücken des um sie gemäß Fig. 2 umgelenkten Klebebandes 3 auf eine Bauteiloberfläche gestattet. Jedoch darf die Umlenkkante 10 nicht so scharf sein, dass das Klebeband 3 mit ihr zertrennt werden könnte.

Die Umlenkkante 10 weist einen ausreichend großen Radius auf und lenkt das Klebeband 3 lediglich um. Der Kontakt zum Bauteil erfolgt erst nach der Umlenkung.

Von dem Befestigungsblock 6 gehen zwei jeweils in einer Längsrichtung L ausgerichtete Griffe 11, 12 ab. Die beiden Griffe 11, 12 sind jeweils aus einem Rohr gebildet, dessen in Längsrichtung L ausgerichtete Längsachse parallel zur Drehachse der Klebebandrolle 2 und auch der Längsachsen der Umlenk- und Führungsrollen 5, 8, 9, 7 sowie der Längsachse des Zapfens verläuft.

Der Klebebandabroller 1 wird vom Benutzer mit beiden Händen an den Griffen 11, 12 gegriffen und in Längsrichtung L geführt, in Fig. 1 nach unten links, so dass das Klebeband 3 mit seiner Klebeseite auf eine nicht dargestellte Bauteiloberfläche aufgeklebt wird.

Fig. 2 zeigt die Anordnung in Fig. 1. Es besteht lediglich ein Unterschied bei der Anordnung des Klebebandes 3, dessen Endabschnitt um die Umlenkkante 10 herumgelegt ist. Die Klebeseite des Klebebandes 3 ist in Fig. 2 vor dem Umlenken dem Betrachter zugewandt und nach dem Umlenken dem Betrachter abgewandt, so dass sie auf eine Bauteiloberfläche 16 aufgebracht werden kann. Neben der Umlenkkante 10 ist in dem Umlenkblock 6 integral eine Anlagefläche 13 ausgebildet, die Anlagefläche 13 ist die Wandung einer in den Umlenkblock 6 eingebrachten Aussparung.

Die Umlenkkante 10 ist als abgeschrägte Ecke eines vom Befestigungsblock 6 abstehenden Streifens ausgebildet. Zur Verschmälerung der Umlenkkante 10 ist eine von der dem Benutzer zugewandten Seite des Befestigungsblocks 6 zur Umlenkkante 10 abgehende Fase 14 ausgeformt.

Der Auftrag des Klebebandes 2 erfolgt in Fig. 2 in Längsrichtung L, so dass der Klebebandabroller 1 mit beiden Händen an den beiden Griffen 11, 12 gehalten wird und entlang einer Aufkleberichtung B, die hier vorzugsweise der Längsrichtung L entspricht, bewegt wird. Dabei wird das Klebeband 3 beispielsweise als Maskierungsband auf die Bauteiloberfläche 16, wie eine Karosserie eines Automobils oder wie Anbauteile (wie Teile aus Metall (Karosse/Heckklappe/Tür) oder Kunststoff (Stoßfänger)) derselben, aufgeklebt.

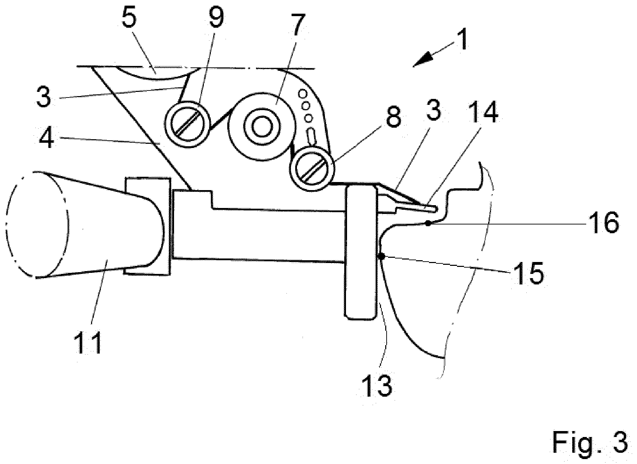

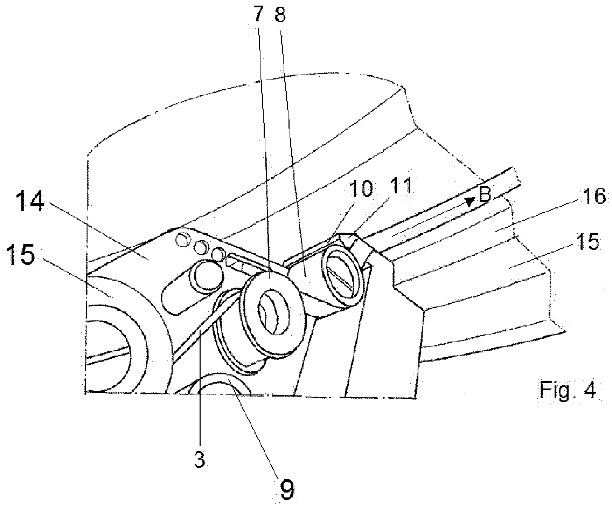

Fig. 3 zeigt den Klebebandabroller 1 in einer Seitenansicht in Funktion; der Benutzer des Klebebandabrollers 1 ist nicht dargestellt. Während der Benutzung werden aber die beiden Griffe 11, 12 vom Benutzer gegriffen und der Klebebandabroller 1 mit der Anlagefläche 13 gegen eine Bauteilkante 15 der Bauteiloberfläche 16 gedrückt, so dass eine Führung des Klebebandabrollers 1 ermöglicht wird und das Klebeband 3 in einem gleichbleibenden Abstand zur Bauteilkante 15 der Bauteiloberfläche 16 entlang der Längsrichtung L auf die Bauteiloberfläche 16 aufgeklebt wird. Fig. 4 zeigt eine vergrößerte Ansicht der Fig. 3 mit einem bereits auf die Bauteiloberfläche 16 aufgeklebten Klebeband 3.

Fig. 4 zeigt die Anordnung der Fig. 3 in einer anderen Perspektive. Bezugszeichen bezeichnen in allen Figuren dieselben Bauteile.

Der Einsatz des Klebebandabrollers 1 kann wie abgebildet oder auch in jeglicher anderen Orientierung erfolgen, vorzugsweise so wie abgebildet oder um 180° gedreht.

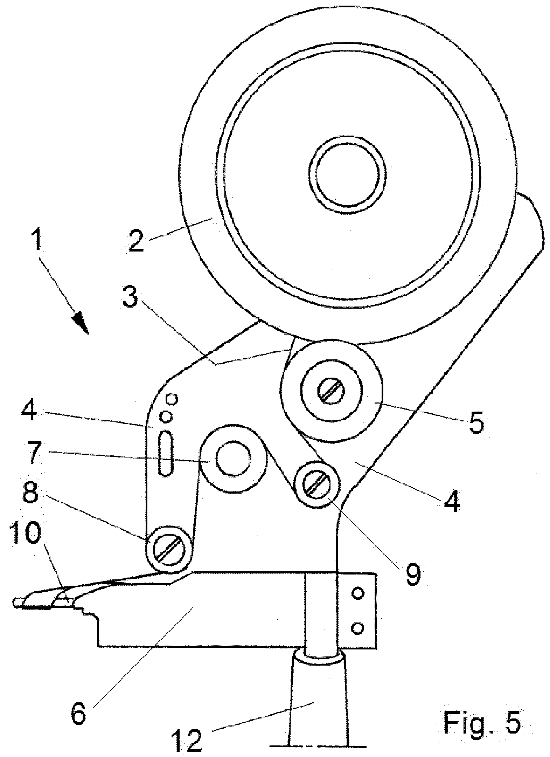

Fig. 5 zeigt einen gegenüber dem Klebebandabroller 1 in Fig. 1-4 spiegelbildlich ausgebildeten Klebebandabroller 1, gleiche Bezugszeichen bedeuten gleiche Bauteile wie bei dem Klebebandabroller, auch wenn sie gespiegelt ausgebildet oder montiert sind. Der gespiegelte Klebebandabroller 1 zeichnet sich gegenüber dem Klebebandabroller 1 dadurch aus, dass die Umlenkrollen 5, 8, 9, die Klebebandrolle 2 sowie die Führungsrolle 7 nicht auf der einen Seite des Bleches 4 wie bei dem Klebebandabroller 1 der Fig. 1 - 4 angeordnet sind, sondern auf der gegenüberliegenden anderen Seite des Bleches 4 abstehen, wobei die Positionen gespiegelt beibehalten werden. Die Umlenkkante 10 ist ebenfalls gespiegelt ausgebildet, wobei die Spiegelebene durch die Ebene des Bleches 4, genau genommen durch eine Mittelebene einer Hauptausbreitungsfläche des Bleches 4, ausgebildet wird. Das Klebeband 3 wird somit in einer entgegengesetzten Aufkleberichtung -B bei der gespiegelten Klebebandrolle 1 in Fig. 5 nach links und in der Aufkleberichtung B bei dem Klebebandabroller 1 der Fig. 1 nach rechts, jeweils gesehen vom Anwender aus, der auf das zu bearbeitende Bauteil schaut, umgelenkt.

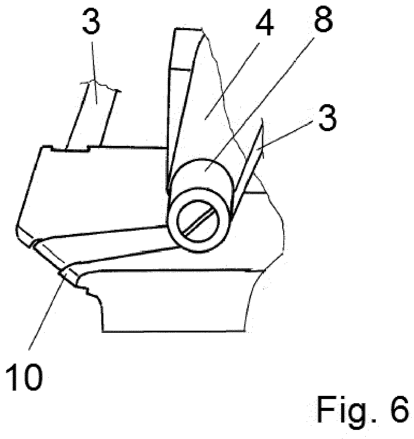

Fig. 6 zeigt die Detailansicht der Fig. 5 in einer perspektivischen Draufsicht, die Detailansicht umfasst die Umlenkkante 10 und die dritte Umlenkrolle 8.

Weiterhin ist gezeigt, dass die Umlenkkante (10) eine Führungsnut aufweist, entlang derer das umgelenkte Klebeband 3 geführt ist.

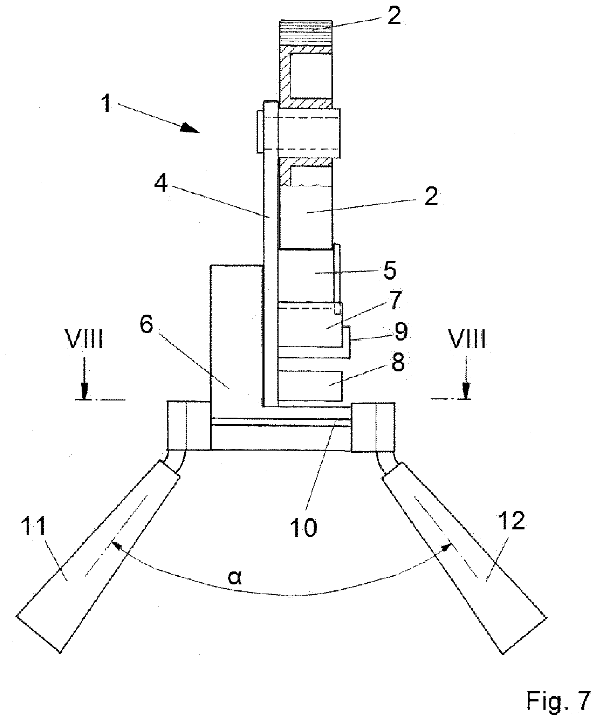

In Fig. 7 ist der gespiegelte Klebebandabroller 1 in einer Frontansicht, d. h. ausgehend von dem zu bearbeitenden Bauteil aus, dargestellt, die Rollen gehen von der anderen Seite des Bleches 4 ab. Das Blech 4 ist mit seinen abstehenden Rollen auf dem Befestigungsblock 6 aufgesetzt und seitlich daran angeschraubt oder anderweitig befestigt. Der Befestigungsblock 6 weist an dem dem zu bearbeitenden Bauteil zugewandten Ende die Umlenkkante 10 mit Fase auf.

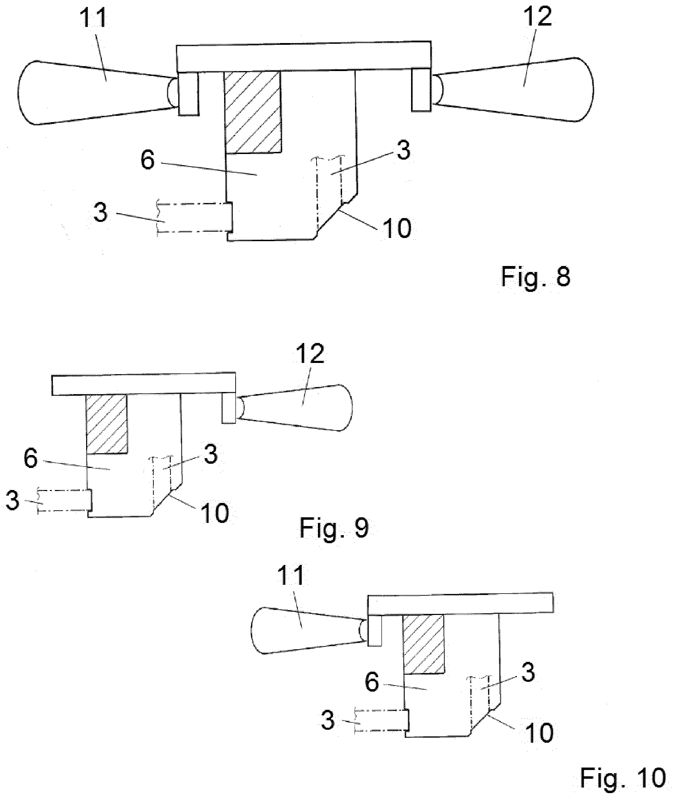

Die beiden Griffe 11, 12 sind in einem Winkel α zueinander angeordnet, die Griffanordnung kann variieren, Fig. 8 zeigt die Griffanordnung in einer Ansicht von einem Querschnitt entlang der Linie VIII - VIII in Fig. 7.

In den Fig. 8, 9 und 10 wird der Klebebandabroller 1 der Fig. 5, 6 in einer schematischen Draufsicht, ausgehend von der Querschnittsfläche VIII-VIII, gezeigt. In Fig. 8 ist der Klebebandabroller 1 mit einem Griff 11 und einem anderen Griff 12 dargestellt. Es sind jedoch auch andere Ausführungsformen des Klebebandabrollers 1 und auch des gespiegelten Klebebandabrollers 1 denkbar. Diese sind in den Fig. 9 und 10 dargestellt, wobei in der Fig. 9 ein Klebebandabroller 1 mit nur dem einem Griff 11 und in der Fig. 10 ein Klebebandabroller 1 mit nur dem anderen Griff 12 dargestellt ist. Abgesehen von der Griffstellung sind die Klebebandabroller 1 der Fig. 8, 9 und 10 jedoch mit dem Klebebandabroller der Fig. 5, 6 baugleich. Eine entsprechende Anordnung der Griffe 11, 12 ist natürlich auch für den nicht gespiegelten Klebebandabroller 1 möglich.

### Bezugszeichenliste

- 1: Klebebandabroller
- 2: Klebebandrolle
- 3: Klebeband
- 4: Blech
- 5: erste Umlenkrolle
- 6: Befestigungsblock
- 7: Führungsrolle
- 8: dritte Umlenkrolle
- 9: zweite Umlenkrolle

- 10: Umlenkkante
- 11: Griff
- 12: Griff
- 13: Anlagefläche
- 14: Fase
- 15: Bauteilkante
- 16: Bauteiloberfläche
- 18: Klebeband

- A: Abziehrichtung
- B: Aufkleberichtung
- -B: entgegengesetzte Aufkleberichtung
- L: Längsrichtung

## Patentansprüche

1. Klebebandabroller mit
einer Aufnahme für eine Klebebandrolle (2) und
einem Führungssystem für ein von der Klebebandrolle (2) abgezogenes Klebeband (3) einer in Abziehrichtung (A) am Ende des Führungssystems angeordneten Umlenkkante (10) für das abgezogene Klebeband (3), die das abgezogene Klebeband (3) aus der Abziehrichtung (A) umlenkt,
wobei
die Umlenkkante (10) eine Umlenkachse aufweist, die eine in Abziehrichtung (A) weisende Komponente aufweist und eine Aufkleberichtung (B) quer zur Abziehrichtung (A) angeordnet ist,
**dadurch gekennzeichnet, dass** neben einer die Umlenkkante (10) umfassenden Umlenkeinrichtung eine Anlage vorgesehen ist, mit der die Umlenkeinrichtung während des Aufklebens auf eine Bauteiloberfläche (16) einen gleichbleibenden Abstand zwischen einer Bauteilkante (15) und dem aufgeklebten Klebeband (3) vorgibt, und die Umlenkkante (10) eine Führungsnut aufweist, entlang derer das umgelenkte Klebeband (3) geführt ist.

2. Klebebandabroller nach Anspruch 1,
**dadurch gekennzeichnet, dass** eine Ebene der Klebebandrolle (2) quer zur Aufkleberichtung angeordnet ist.

3. Klebebandabroller nach Anspruch 1 oder 2,
**dadurch gekennzeichnet, dass** die Aufkleberichtung in einem Winkel zwischen 1° bis 179° oder zwischen 181° bis 359° zur Abziehrichtung (A) des Klebebandes (3) in einer Klebebandebene angeordnet ist.

4. Klebebandabroller nach Anspruch 3,
**dadurch gekennzeichnet, dass** die Umlenkachse in einem Winkel zwischen 90,5° bis 179,5° oder zwischen 180,5° bis 269,5° zu einer Längsrichtung (L) des Klebebandes (3) angeordnet ist.

5. Klebebandabroller nach Anspruch 4,
**dadurch gekennzeichnet, dass** die Umlenkachse in einem Winkel von 135° bzw. 225° ± 20°, besonders bevorzugt ± 10° angeordnet ist.

6. Klebebandabroller nach einem der vorstehenden Ansprüche,
**dadurch gekennzeichnet, dass** die Anlage eine ebene Anlagefläche (13) aufweist und die Umlenkkante (10) schräg zur Anlagefläche (13) angeordnet ist.

7. Klebebandabroller nach Anspruch 6,
**dadurch gekennzeichnet, dass** die Umlenkeinrichtung einstückig ausgebildet ist und an einer einem zentralen Bauteil (19) zugewandten Seite die Anlagefläche (13) aufweist und benutzerseitig der Anlagefläche (13) ein zum zentralen Bauteil hin abstehender Streifen vorgesehen ist, dessen eine Längsseite zur dem zentralen Bauteil (19) zugewandten Seite hin abgeschrägt ist und die Umlenkkante (10) ausbildet.

8. Klebebandabroller nach Anspruch 7,
**dadurch gekennzeichnet, dass** an einer benutzerabseitigen Seite des abstehenden Streifens ein Anpressmittel angeordnet ist.

9. Klebebandabroller nach einem der vorstehenden Ansprüche,
**dadurch gekennzeichnet, dass** das Führungssystem wenigstens eine Rolle (7) mit zwei seitlichen Führungsrändern und wenigstens eine, vorzugsweise zwei gerade Rollen (5, 8, 9) aufweist.

10. Verfahren zum Aufkleben eines Klebebandes (3) auf eine Bauteiloberfläche (16), indem das Klebeband (3) von einer Klebebandrolle (2) abgezogen wird und
durch ein Führungssystem geführt wird und
das abgezogene Klebeband (3) mittels einer Umlenkkante (10), die eine Umlenkachse aufweist, die eine in eine Abziehrichtung (A) weisende Achsenkomponente aufweist, aus der Abziehrichtung (A) in eine quer zur Abziehrichtung (A) angeordnete Aufkleberichtung (B) umgelenkt wird, **dadurch gekennzeichnet, dass**
ein Klebebandabroller (1) mittels einer am Klebebandabroller (1) angeordneten Anlage an einer Bauteilkante (15) in einem gleichbleibenden Abstand zur Bauteilkante (15) geführt wird, und die Umlenkkante (10) eine Führungsnut aufweist, entlang derer das umgelenkte Klebeband (3) geführt wird.

11. Verfahren nach Anspruch 10,
**dadurch gekennzeichnet, dass** das abgezogene Klebeband (3) in einem Winkel von 1° bis 179° oder zwischen 181° bis 359° in die Aufkleberichtung (B) umgelenkt wird.

12. Verfahren nach Anspruch 11,
**dadurch gekennzeichnet, dass** das abgezogene Klebeband (3) in einem Winkel von 90° bzw. 270° ±20°, vorzugsweise ±10° umgelenkt wird.

## Claims

1. Adhesive tape unwinder having
a receptacle for a roll (2) of adhesive tape and
a guide system for an adhesive tape (3) pulled off from the roll (2) of adhesive tape
a deflecting edge (10) for the pulled-off adhesive tape (3), which deflecting edge is arranged at the end of the guide system in the pull-off direction (A) and deflects the pulled-off adhesive tape (3) from the pull-off direction (A),
wherein
the deflecting edge (10) has a deflection axis which has a component pointing in the pull-off direction (A), and an affixing direction (B) is arranged transversely to the pull-off direction (A),
**characterized in that** next to a deflecting device comprising the deflecting edge (10) there is provided a contact element by means of which the deflecting device predefines a uniform distance between a component edge (15) and the affixed adhesive tape (3) in the course of affixing the tape to a component surface (16), and the deflecting edge (10) has a guide groove along which the deflected adhesive tape (3) is guided.

2. Adhesive tape unwinder according to Claim 1, **characterized in that** a plane of the roll (2) of adhesive tape is arranged transversely to the affixing direction.

3. Adhesive tape unwinder according to Claim 1 or 2, **characterized in that** the affixing direction is arranged at an angle of between 1° and 179° or between 181° and 359° to the pull-off direction (A) of the adhesive tape (3) in an adhesive-tape plane.

4. Adhesive tape unwinder according to Claim 3, **characterized in that** the deflection axis is arranged at an angle of between 90.5° and 179.5° or between 180.5° and 269.5° to a longitudinal direction (L) of the adhesive tape (3).

5. Adhesive tape unwinder according to Claim 4, **characterized in that** the deflection axis is arranged at an angle of 135° or 225°, respectively, ± 20°, particularly preferably ± 10°.

6. Adhesive tape unwinder according to one of the preceding claims,
**characterized in that** the contact element has a planar contact surface (13), and the deflecting edge (10) is arranged obliquely to the contact surface (13).

7. Adhesive tape unwinder according to Claim 6, **characterized in that** the deflecting device is formed in one piece and has the contact surface (13) on a side facing a central component (19), and a strip, which projects towards the central component and one longitudinal side of which is bevelled towards the side facing the central component (19) and forms the deflecting edge (10), is provided on the user side of the contact surface (13).

8. Adhesive tape unwinder according to Claim 7, **characterized in that** a pressing means is arranged on a side of the projecting strip that is remote from a user.

9. Adhesive tape unwinder according to one of the preceding claims,
**characterized in that** the guide system has at least one roller (7) with two lateral guide edges and at least one, preferably two straight rollers (5, 8, 9).

10. Method for affixing an adhesive tape (3) to a component surface (16), by pulling off the adhesive tape (3) from a roll (2) of adhesive tape (2) and
guiding said adhesive tape through a guide system and the pulled-off adhesive tape (3) being deflected by means of a deflecting edge (10), which has a deflection axis having an axial component pointing in a pull-off direction (A), from the pull-off direction (A) into an affixing direction (B) arranged transversely to the pull-off direction (A), **characterized in that**
an adhesive tape unwinder (1) is guided by means of a contact element, arranged on the adhesive tape unwinder (1), on a component edge (15) at a uniform distance from the component edge (15), and the deflecting edge (10) has a guide groove along which the deflected adhesive tape (3) is guided.

11. Method according to Claim 10,
**characterized in that** the pulled-off adhesive tape (3) is deflected at an angle of from 1° to 179° or between 181° and 359° in the pull-off direction (B).

12. Method according to Claim 11,
**characterized in that** the pulled-off adhesive tape (3) is deflected at an angle of 90° or 270°, respectively, ± 20°, preferably ± 10°.

## Revendications

1. Dévidoir de ruban adhésif comprenant
un logement pour un rouleau de ruban adhésif (2) et
un système de guidage pour un ruban adhésif (3) soutiré du rouleau de ruban adhésif (2),
un bord de déviation (10) pour le ruban adhésif (3) soutiré, agencé dans la direction de soutirage (A) à l'extrémité du système de guidage, qui dévie le ruban adhésif (3) soutiré de la direction de soutirage (A),
le bord de déviation (10) présentant un axe de déviation, qui présente une composante orientée dans la direction de soutirage (A) et une direction de collage (B) étant agencée transversalement à la direction de soutirage (A), **caractérisé en ce qu'**un appui est prévu à côté d'un dispositif de déviation comprenant le bord de déviation (10), avec lequel le dispositif de déviation définit, pendant le collage sur une surface de composant (16), une distance constante entre un bord de composant (15) et le ruban adhésif (3) collé, et le bord de déviation (10) présente une rainure de guidage le long de laquelle le ruban adhésif (3) dévié est guidé.

2. Dévidoir de ruban adhésif selon la revendication 1, **caractérisé en ce qu'**un plan du rouleau de ruban adhésif (2) est agencé transversalement à la direction de collage.

3. Dévidoir de ruban adhésif selon la revendication 1 ou 2, **caractérisé en ce que** la direction de collage est agencée selon un angle compris entre 1° et 179° ou entre 181° et 359° par rapport à la direction de soutirage (A) du ruban adhésif (3) dans un plan de ruban adhésif.

4. Dévidoir de ruban adhésif selon la revendication 3, **caractérisé en ce que** l'axe de déviation est agencé selon un angle compris entre 90,5° et 179,5° ou entre 180,5° et 269,5° par rapport à une direction longitudinale (L) du ruban adhésif (3).

5. Dévidoir de ruban adhésif selon la revendication 4, **caractérisé en ce que** l'axe de déviation est agencé selon un angle de 135° ou 225° ± 20°, de préférence ± 10°.

6. Dévidoir de ruban adhésif selon l'une quelconque des revendications précédentes, **caractérisé en ce que** l'appui présente une surface d'appui plane (13) et le bord de déviation (10) est agencé en biais par rapport à la surface d'appui (13).

7. Dévidoir de ruban adhésif selon la revendication 6, **caractérisé en ce que** le dispositif de déviation est configuré d'un seul tenant et présente la surface d'appui (13) sur un côté tourné vers un composant central (19) et, du côté de l'utilisateur de la surface d'appui (13), une bande en saillie vers le composant central est prévue, dont un côté longitudinal est incliné vers le côté tourné vers le composant central (19) et forme le bord de déviation (10).

8. Dévidoir de ruban adhésif selon la revendication 7, **caractérisé en ce qu'**un moyen de pression est agencé sur un côté détourné de l'utilisateur de la bande en saillie.

9. Dévidoir de ruban adhésif selon l'une quelconque des revendications précédentes, **caractérisé en ce que** le système de guidage présente au moins un rouleau (7) comprenant deux rebords de guidage latéraux et au moins un, de préférence deux rouleaux droits (5, 8, 9).

10. Procédé pour coller un ruban adhésif (3) sur une surface de composant (16), par le fait que
le ruban adhésif (3) est soutiré d'un rouleau de ruban adhésif (2) et
guidé à travers un système de guidage et
le ruban adhésif (3) soutiré est dévié de la direction de soutirage (A) dans une direction de collage (B) agencée transversalement à la direction de soutirage (A) au moyen d'un bord de déviation (10), qui présente un axe de déviation qui présente une composante d'axe orientée dans une direction de soutirage (A), **caractérisé en ce que**
un dévidoir de ruban adhésif (1) est guidé au moyen d'un appui agencé sur le dévidoir de ruban adhésif (1) sur un bord de composant (15) à une distance constante du bord de composant (15), et le bord de déviation (10) présente une rainure de guidage le long de laquelle le ruban adhésif (3) dévié est guidé.

11. Procédé selon la revendication 10, **caractérisé en ce que** le ruban adhésif (3) soutiré est dévié selon un angle de 1° à 179° ou compris entre 181° et 359° dans la direction de collage (B).

12. Procédé selon la revendication 11, **caractérisé en ce que** le ruban adhésif (3) soutiré est dévié selon un angle de 90° ou 270° ± 20°, de préférence ± 10°.
